# EUROPEAN PATENT SPECIFICATION

(11) **EP 3 596 137 B1**
(45) Date of publication and mention of the grant of the patent: **31.12.2025**
(21) Application number: 18768242.2
(22) Date of filing: 14.03.2018
(51) Int. Cl.: C08F 2/50, C09D 11/101, C09D 11/037, C09D 11/32, C09D 4/00, C09D 7/41

(54) **UV-LED COATING COMPOSITIONS**
UV-LED BESCHICHTUNGSZUSAMMENSETZUNGEN
COMPOSITIONS DE REVÊTEMENT DURCISSABLES PAR DEL UV

(30) Priority: 16.03.2017 US 201762472037 P
(43) Date of publication of application: 22.01.2020
(73) Proprietor: Sun Chemical Corporation, Parsippany, NJ 07054 (US)
(72) Inventor: GAUDL, Kai-Uwe Walter, 63579 Freigericht (DE)
(74) Representative: Carpmaels & Ransford LLP
(86) International application number: PCT/US2018/022368
(87) International publication number: WO 2018/170086

(56) References cited:
- WO-A1-2008/061957
- WO-A1-2015/183719
- WO-A1-2016/186838
- WO-A2-2007/146909
- DE-A1- 102013 003 046
- US-A- 5 939 195
- US-A- 6 114 406
- US-B2- 7 709 545

## Description

### FIELD OF THE INVENTION

The invention disclosed herein is directed to the field of energy curable coating compositions that are curable by exposure to ultraviolet light emitted by light emitting diode (LED) sources that are used in making printed materials. In particular, the invention is directed to minimizing and/or preventing yellowing that occurs upon curing when certain components are present in the coating compositions.

### BACKGROUND OF THE INVENTION

UV-LED lighting has become more and more ubiquitous in modern day life as its use can now be as the primary lighting source in many environments such as homes, offices, businesses, industrial workplaces, outdoor lighting, in automobiles, to name but a few possibilities. LED technology, such as embodied in LED light bulbs, provides many advantages such as energy savings, extended life, and an ecologically safe (e.g., mercury-free) product, when compared to mature lighting technologies. Further, in the graphic arts sector, printing presses are being more frequently equipped or refitted with compact UV-LED curing system that emit at wavelengths encompassing the peak wavelengths of 385-395 nm. Advantageously, UV-LED bulbs used in the curing systems do not generate ozone, which is a significant improvement over ozone-generating mercury bulbs that have been the state of the art in UV systems for many years.

One challenge presented by UV-LED technology is the effect of oxygen inhibition. For example, oxygen as a bi-radical can react with radicals derived from a photoinitiator used to initiate and propagate a UV-cure, or the bi-radical oxygen can react with radicals formed from a monomer or radicals on the growing polymer chain. In either case, the monomer or growing polymer is rendered inactive, usually as a peroxide derivative. Since oxygen is present at the surface of the ink or coating undergoing curing, oxygen radical generation can lead to insufficient drying at the surface. This is especially problematic with commercial UV-LED light dryers, which emit at 365-405 nm, because the lower wavelengths are missing, which are favorable for surface cure and reducing oxygen inhibition. State of the art LED lamps, having wavelengths below 365 nm, are not high enough in power to ensure a good drying at press speeds of 10,000 - 18,000 sheets per hour.

Several measures have been proposed to minimize oxygen inhibition during UV-LED drying. For example, the UV-LED dryer environment can be rendered inert by filling the environment with nitrogen. The difficulty with this approach is that it requires a sophisticated press-side installation to reduce the oxygen content at the point of cure and is hard to install for sheetfed presses. US 2006/0121208 describes an approach in which LED-arrays of mixed wavelengths are employed in order to better exploit the absorption band-range of UV-LED photoinitiators, but this does not reduce oxygen inhibition. Oxygen scavengers and reducing agents have been used to control the adverse effect of free radical oxygen. However, the use of typical reducing agents, such as aromatic or aliphatic phosphines or phosphites, and the presence thereof in an ink or coating can lessen the storage stability of the coating composition (Progress in Organic Coatings 77 (2014), page 1789-1798). Thiols, such as trimethylolpropane tri-(3-mercaptopropionate) have been proposed in US2013/0216838 to counter-act oxygen inhibition, but thiols have an unpleasant odor, which is not desired in flexible packaging materials.

UV-LED type II photoinitiator systems contain an amine component that can reactivate peroxide radicals. For example, amines can donate hydrogen radicals to the peroxide radicals that form -- whether they derive from type I photoinitiators or type II photoinitiators -- resulting in reactivated monomers or chains undergoing polymerization. ("Photoinitiators for Free Radical, Cationic and Anionic Polymerization, John Wiley & Sons 1998, page 84, ISBN: 0471978922).

However, for UV-LED curing, the suitable type II photoinitiator systems that absorb in the range of the UV-LED emission, which is for industrial UV-LED dryers used in printing presses, is 385-405 nm. Photoinitiators absorbing at these wavelengths are not plentiful. The only two kinds believed to be used are the thioxanthones, such isopropyl thioxanthone (ITX), and dialkylaminobenzophenones, such as ethyl Michler's ketone.

A drawback of type II photoinitiator materials is that they cause yellowing upon curing in compositions that include them, which is not acceptable in clear or white coating formulations, and while not as adverse, still not acceptable in darker coatings. Yellowing results from the photoinitiator materials absorbing light in the visible light range that is next to the UV-light range. Moreover, upon irradiation, yellowing is often further increased due to the formation of more complex visible-light absorbing side products caused during the photoinitiation process by thioxanthones and amines. The inclusion of 0.1 wt% or more of 2-isopropylthioxanthone (ITX) in a clear or white coating composition usually shows some yellowing on curing.

JP2013-087188 describes a UV-LED curable composition which says that in view of yellowing, the amount of thioxanthone in the composition is 0.5% by mass or less, and the amount of tertiary amine in the composition is 1% by mass or less.

US 2015/0325715 may also be of interest in this area. US 6,114,406 relates to a UV curable inkjet composition comprising a polyfunctional alkoxylated or polyalkoxylated acrylate monomer, a photoinitiator and preferably a colorant. US 7,709,545 relates to UV curable compositions containing benzophenones such as thioxanthone derivatives as photoinitiators. WO 2016/186838 relates to energy curable inkjet inks or coating compositions comprising at least one aminoacrylate and at least one photoinitiator. WO 2008/061957 relates to a radiation curable composition comprising a curable compound, a photoinitiator and a co-initiator. WO 2015/183719 relates to an energy curable ink or coating composition comprising a thioxanthone derived photoinitiator and an amine synergist.

### SUMMARY OF THE INVENTION

Described herein are UV-LED curable coating compositions that cure thoroughly, including good curing at the surface, and which exhibit little to no yellowing when cured. The invention is as defined in the appended claims.

The UV-LED light curable coating compositions of the present invention comprise one or more compounds having at least one alpha, beta-ethylenically unsaturated polymerizable double bond; a type II photoinitiator comprised of a thioxanthone and an amine, wherein the thioxanthone component of the type II photoinitiator system is present in the composition in an amount of 0.1wt% to 10wt% and the amine component of the type II photoinitiator system is present in the composition in an amount of 0.01wt% to 15wt%; a colorant, and an optical brightener.

In a preferred aspect, the UV-LED light curable coating compositions of the present invention further comprise a type I photoinitiator based on a phosphine oxide and/or an α-aminoalkylphenone.

The one or more compounds having at least one alpha, beta-ethylenically unsaturated polymerizable double bond generally are compounds having a double bond at a terminal end of the compound.

In a preferred aspect, the colorant is one that has the effect of one or more or of offsetting, negating, neutralizing, minimizing, etc., the yellowing that occurs when type II photoinitiator based on a thioxanthone and/or an amine are included in the UV-curable composition. In a preferred aspect, the colorant is a colorant selected a purple colorant, a violet colorant, a blue colorant, a violet-blue colorant, and combinations thereof.

The UV-LED curable compositions exhibit good surface cure and low yellowing when exposed to curing energy emitted by UV-LED light sources, such as those used in printing operations.

The UV-LED light curable coating compositions are suitable for use as overprint varnishes and protective coatings. They may also be used as printing inks.

Though UV-LED is the preferred method for curing the compositions of the present invention, it is also possible to cure with other actinic light sources, such as for example a low pressure mercury bulb emitting UV-light, a medium-pressure mercury arc bulb, a xenon arc bulb, a metal halide bulb, an excimer bulb, or sunlight, although this may require formulations with different photoinitiators. The term "actinic" refers to the property of light radiation that causes a photochemical effect in a subject exposed to the light.

The coatings of the present invention exhibit a complete and thorough cure upon exposure to UV-LED curing energy, including at the surface of the coating. Improved surface curing of UV-coatings, when cured by LED light is a significant benefit provided by the disclosed coating compositions. Other benefits and advantages include lower cost, due at least in part to the inclusion of type II-photoinitiator systems based on thioxanthones. Using less expensive type I phosphine oxide photoinitiators further reduces cost. Further, the yellowing effect is reduced or avoided in the present compositions, due in part by including one or more colorants and optionally, optical brighteners.

Thioxanthones absorb light in both the UV range and the visible range. As a result, thioxanthone-containing coating compositions can undergo yellowing, with the intensity of yellow color being related to the amount of thioxanthone in the composition. This can be particularly problematic for thioxanthone-containing UV-LED curable compositions, in which there is a desire to include larger amounts of thioxanthones and amines to prevent the adverse effects otherwise caused by the generation of free-radical oxygen while providing for a good surface cure.

Further, during the UV-LED curing, thioxanthones may undergo side reactions that, for example, result in the formation of thioxanthone-derived pinacols, as described in "Industrial Photoinitiators", CRC Press 2010, page 70 & 139, ISBN: 878-1-4398-2745-1. This may intensify the yellow color of the coating compositions after UV-LED cure.

In a preferred aspect, the UV-LED curable coating compositions provide a solution to the problem that arises when relatively high amounts of thioxanthones, present with amines in type II photoinitiator systems, are included in the compositions. Such relatively high amounts of thioxanthones include 0.1wt% and greater, 0.5wt % and greater, 1.0wt % and greater, and >1.0wt % and greater, based on the total weight of the composition.

### BRIEF DESCRIPTION OF THE DRAWING

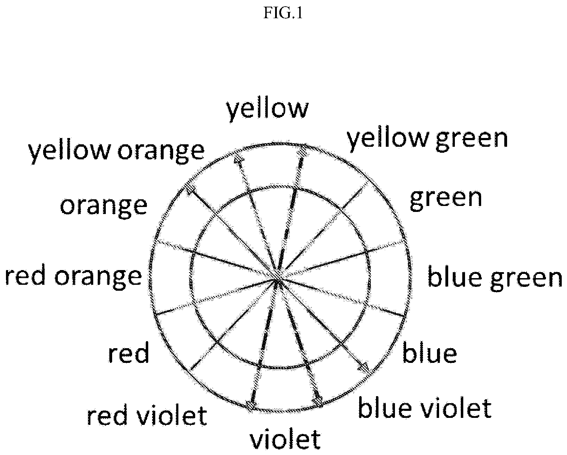

FIG. 1 is a color wheel that in some aspects of the present invention can be used to select the color of a complementary colorant.

### DETAILED DESCRIPTION OF THE INVENTION

Described herein are UV-LED coating compositions including lower cost thioxanthone type II photoinitiators that undergo minimal to no yellowing upon curing with UV light. The UV-LED light curable coating compositions of the present invention comprise one or more compounds having at least one alpha, beta-ethylenically unsaturated polymerizable double bond; a type II photoinitiator based on a thioxanthone and an amine wherein the thioxanthone component of the type II photoinitiator system is present in the composition in an amount of 0.1wt% to 10wt% and the amine component of the type II photoinitiator system is present in the composition in an amount of 0.01wt% to 15wt%; a colorant and an optical brightener, with optional inclusions of one or more type I photoinitiators based on a phosphine oxide and/or an α-aminoalkylphenone. The UV-LED curable compositions provide good surface cure and undergo minimal to no yellowing, due in part to the inclusion of the colorant and the optional optical brightener.

The inventors have discovered that UV-LED light curable coating compositions containing derivatives of thioxanthones, such as isopropyl thioxanthone and diethyl thioxanthone, and small amounts of complementary colorants, in combination with an optical brightener, surprisingly show strongly reduced yellowing or no yellowing after curing with UV-LED light emitting at wavelengths of about 365 to about 405 nm. That is, the yellowing of the composition that occurs when thioxanthones are present is offset, negated, neutralized, and/or minimized by the inclusion of color matching components selected from complementary colorants (e.g., purple colorants, violet colorants, blue colorants, violet-blue colorants, and combinations thereof). The optical brightener, enhances the reduction or elimination of yellowing.

Another kind of type II photoinitiators are dialkylaminobenzophenones, such as ethyl Michler's ketone. Optionally, they may be included in the present UV curable coating compositions in an amount of about 0.01wt% to about 1.0wt%, or 0.01 to about 0.5wt%, based on the total weight of the composition.

In one aspect, the color shade and intensity of the yellow in the cured coating is determined with a formulation not including colorant and optical brightener. This formulation should exhibit good surface cure, e.g., through the inclusion of a type II photoinitiator system including thioxanthone and amine. The maximum yellowing after UV-LED cure under over-cure conditions is determined, that is, the UV-LED coating composition is cured with more light than necessary for full cure.

For example, a composition including one or more alpha beta-ethylenically unsaturated polymerizable double bonds and a type II photoinitiator system comprised of a thioxanthone and an amine is cured with UV light in order to provide a cured composition. An analysis of the b*-values of the color of the cured composition is performed to determine the extent of yellowing. Based on the analysis, a complementary colorant that will offset, minimize, neutralize, negate, etc. yellowing is then selected and included in the composition in order to provide a colorant-including composition. Optionally, an optical brightener is included in the colorant-including composition. The colorant-including composition is cured with UV light to provide a colorant-including cured composition. An analysis of the b*-values of the color of the cured composition is performed to determine the extent of yellowing, which will be less than the initially tested composition that does not include the selected colorant. Thus, a colorant-including cured composition is provided that exhibits less yellowing than would be exhibited by a composition that does not include the colorant that offsets, negates, etc. the yellowing caused when thioxanthone-containing compositions are cured, such as with UV light.

In another aspect of the above method, a type I photoinitiator selected from a phosphine oxide, an α-aminoalkylphenone, and combinations thereof may be included in the compositions, that is, included in the compositions before and after the colorant is included.

In another aspect of the above method, the curing of the compositions, before and after including the colorant, may be with over-cure conditions.

Color (such as variations of yellow) may differ in one or more of (1) hue, (2) chroma (also called saturation, intensity, or colorfulness), and (3) lightness (or value, tone, or brightness). Variations in values are known as tints and shades. A tint is a yellow or other hue mixed with white. A shade is a yellow or another hue mixed with black. Yellowing of the described UV-LED coating compositions may be characterized by the Commission Internationale de l'Eclairage (CIE), L* a*b* color system (EN ISO 11664-4). The a*, b* values are a measure the color shade and intensity, and L is a measure of the brightness (L=0 is black and L= 100 is white). Positive b*-values measure the degree of yellowing from 0 (no yellowing) to 150 units. The L*, a*, b* values are measured with a standard spectral photometer. Positive b* values indicate that there is a degree of yellow in the color space.

Based on the color values measured (a*, b* values), the complementary matching colorant is selected. For the yellowish to yellow-orange color of the cured LED-coating composition caused by the type II photoinitiator system (e.g., the thioxanthones and amines), it is preferred that the colorant be a purple colorant, a violet colorant, a violet-blue colorant, a blue colorant, colorants representing color variations in between these colors, and colorant combinations thereof. A purple to violet to blue colorant or combination thereof is preferred. While not wishing to be bound any theory, it is believed that purple to violet colorants balance the yellow color that develops when the thioxanthone-containing compositions are cured with UV light. The balancing takes place through an offsetting, minimizing, neutralizing, negating, etc., effect.

Alternatively, yellowing after curing can also be assessed by other similar measurements, such as the RGB color values, which also define the color shade.

In addition to the above described manner for selecting the complementary colorant, a relatively straightforward way of finding a complementary colorant is to employ a color wheel, such as depicted in FIG. 1. The color wheel is a chart representing the relationships between colors. A color wheel may show hues arranged in a circle, connected by lines or shapes. The complementary colors are positioned opposite each other. By traversing the diameter of the circle of the wheel from the location of the exhibited color e.g., the yellow color of the composition, one arrives at a complementary color that can offset, minimize, neutralize, negate, etc., the exhibited yellow. With that information, a complementary colorant can then be selected for addition to the composition.

Additionally, there are various computer programs that can be used determine the complementary color of the colorant.

Pigments such as pigment violet 23, pigment violet 34, pigment blue 15:3, and mixtures thereof are preferred complementary colorants. A preferred dye is solvent blue 104.

The optical brightener present in the described compositions converts residual greyish hues into white hues, which further improves upon the aesthetic appearance of the cured composition. When mixing complementary colors, the result may be a greyish color. The optical brightener can convert residual shades of grey to white, which may not be solved only by including the colorant in the composition.

In one aspect, the cured coating of the present invention exhibits a b* value of ≤ 5, preferably ≤ 4, more preferably ≤ 3, even more preferably ≤ 2, and still even more preferably ≤ 1. A b* value of 2 or less is excellent, since the extent of yellowing has been found to not be detectable by the naked eye, even when the presently described coating are applied to white or clear substrates.

One particular aspect, the presently described coating compositions are clear coating compositions, matte coating compositions, white coating compositions, and overprint varnishes in which yellowing can be readily seen. Applicants have found that these kinds of compositions, when including the colorants and optionally the optical brighteners described herein, exhibit b* values of ≤ 2, more preferably < 2, and even more preferably ≤ 1. Thus, for the kinds of coatings in which yellowing is likely to be detected, Applicants have found a way to render it not observable by the naked eye.

It should be understood that in some circumstances, some yellowing may be accepted, e.g., b* values of ≤ 5 may be accepted in some instances. Often, what is acceptable in terms of the b* value will depend on a number of factors, such as the presence of other components in the compositions, the color of the substrate material, and the end use of the printed material.

It is possible to obtain a beneficial effect by including a colorant but omitting the optical brightener. It has been found that with this arrangement, it is possible to lessen yellowing and obtain a b* value of ≤ 2. However, including a colorant and an optical brightener in the compositions gives more favorable results; thus it is preferred that the optical brightener be present in the compositions.

In one aspect the colorant (e.g., pigment or dye) and optical brightener are added to the coating mixture as a color concentrate, in which the colorant and optical brightener are dissolved or dispersed in an acrylic monomer with aid of dispersion aids, which are well-known in the art, and the use of three roll mills, bead-mills and dissolver, when required.

The polymerizable compound of the inventive coating compositions have at least one alpha, beta-ethylenically unsaturated polymerizable double bond, such as for example acrylates, methacrylates, vinyls, vinylethers, acrylamides, and combinations thereof. Preferred are the acrylates, and more preferred are multi-functional acrylates.

Suitable acrylates and methacrylates include, for example, those suitable for inclusion in radiation curable compositions, such as n-octyl acrylate, iso-octyl acrylate, n-decyl acrylate, lauryl acrylate, stearyl acrylate, ethylene glycol diacrylate, 1,4-butandiol diacrylate, 1,6-hexandiol diacrylate, dipropylene glycol diacrylate, neopentylglycol diacrylate, ethoxylated neopentylglycol diacrylates, propoxylated neopentylglycol diacrylates, tripropylene glycol diacrylate, bisphenol A diacrylate, ethoxylated bisphenol A diacrylates, bisphenol A diglycidylether diacrylate, ethoxylated bisphenol A diacrylates, poly(ethylene)glycol diacrylates, trimethylolpropane triacrylate, ethoxylated trimethylolpropane triacrylates, propoxylated trimethylolpropane triacrylates, propoxylated glycerol triacrylates, pentaerythritol triacrylate, ethoxylated pentaerythritol triacrylates, propoxylated pentaerythritol tetraacrylates, ethoxylated pentaerythritol tetraacrylates, ditrimethylolpropane tetraacrylate, dipentaerythritol pentaacrylate, dipentaerythritol hexaacrylate or mixtures thereof, and the like. Preferred are ethoxylated trimethylolpropane triacrylates, ethoxylated pentaerythritol triacrylates and propoxylated pentaerythritol tetraacrylates, oligomeric and polymeric acrylates applied in the art, such as for example epoxy acrylates, polyester acrylates, acrylated polyurethanes, acrylated polyacrylates, acrylated polyethers, acrylated polyamines, acrylated epoxidized oils based on linseed oil and soybean oil, and combinations thereof. Suitable water-soluble or water-dispersible acrylates are, for example, highly ethoxylated multifunctional acrylates such as polyethylene oxide diacrylates or ethoxylated trimethylol propane triacrylates, ethoxylated pentaerythritol triacrylates or epoxy acrylates, such as alkane diglycidylether diacrylates, polyglycerol diacrylates or aqueous acrylated polyurethane acrylate dispersions such as Bayhydrol UV2280 and UV2282 (Trademark of Bayer Company).

Mono- and multi-functional methacrylates can be used as well. While sometimes slower in free-radical polymerization, they can be used to modify other properties such as adhesion and glass transition temperature. Suitable methacrylates include, for example, as n-octyl methacrylate, iso-octyl methacrylate, n-decyl methacrylate, lauryl methacrylate, stearyl methacrylate, ethylene glycol dimethacrylate, 1,4-butandiol dimethacrylate, 1,6-hexandiol dimethacrylate, dipropylene glycol dimethacrylate, neopentylglycol dimethacrylate, ethoxylated neopentylglycol dimethacrylates, propoxylated neopentylglycol dimethacrylates, tripropylene glycol dimethacrylate, bisphenol A dimethacrylate, ethoxylated bisphenol A dimethacrylates, bisphenol A diglycidylether dimethacrylate, ethoxylated bisphenol A dimethacrylates, poly(ethylene)glycol dimethacrylates, trimethylolpropane trimethacrylate, ethoxylated trimethylolpropane trimethacrylates, propoxylated trimethylolpropane trimethacrylates, propoxylated glycerol trimethacrylates, pentaerythritol trimethacrylate, ethoxylated pentaerythritol trimethacrylates, propoxylated pentaerythritol tetramethacrylates, ethoxylated pentaerythritol tetramethacrylates, ditrimethylolpropane tetramethacrylate, dipentaerythritol pentamethacrylate, dipentaerythritol hexamethacrylate or mixtures thereof.

The compound having one or more alpha beta-ethylenically unsaturated polymerizable double bonds may comprise amino acrylates. If present, they may be included in amounts of about 5wt% to about 20%, based on the total weight of the composition.

The UV-LED curable compositions of the present invention include a type II photoinitiator system based on thioxanthones and amines. The type II photoinitiator system may be present in the composition in an amount of about 0.1wt% to about 15wt%, preferably about 1.0wt% to about 15wt%, and more preferably about 1.0wt% to about 10wt%.

Suitable type II photoinitiator systems based on thioxanthones and amines that may be used in the compositions described herein include, for example, 2-isopropylthioxanthone, 4-isopropylthioxanthone, 2,4-dimethylthioxanthone, 2,4-diethylthioxanthone, 2,4-diisopropylthioxanthone, 2-chlorothixanthone, 2-chloro-4-isopropoxythixanthone and their oligomeric counterparts (e.g., oligomeric thioxanthones for low migration applications having a molecular weight of 500 Daltons or less) such as Omnipol TX (IGM), Genopol TX (Rahn) and aliphatic or aromatic tertiary amines such as triethyl amine, N,N-dimethyl ethanolamine, N-methyl-diethanolamine, triethanolamine, 2-(dimethylamino) ethyl benzoate, ethyl-4-dimethylamino benzoate, 2-ethylhexyl-4-dimethylamino benzoate, isoamyl-4-dimethylamino benzoate, butoxyethyl-4-dimethylamino benzoate and their oligomeric counterparts (e.g., oligomeric thioxanthones for low migration applications having a molecular weight of 500 Daltons or less) such as Omnipol ASA (IGM), Genopol AB (Rahn) and amino acrylates, for example amine-modified polyether acrylates, such as the BASF Laromer grades LR 8956, LR 8889, LR 8869, LR 8894, PO 77F, PO 83F and PO 84F, PO 94F and mixtures thereof.

Preferred type II photoinitiator system combinations employ amines selected from aminobenzoates (e.g., ethyl-N,N-dimethylaminobenzoate, ethylhexyl aminobenzoate) and amine-modified polyether acrylates, and thioxanthones such as isopropyl thioxanthone and diethylthioxanthone. Secondary amines or primary amines may be used in type II photoinitiator systems.

The UV-LED curable compositions of the present invention preferably also include a type I photoinitiator system. The type I photoinitiator system may be based on phosphine oxides and/or α-aminoalkylphenones. If present, the type I photoinitiator system is present in the composition in an amount of about 0.05wt% to about 10wt%, preferably about 1.0wt% to about 10wt%, and more preferably about 1.5wt% to about 10wt%.

The type I photoinitiators based on phosphine oxides and/or α-aminoalkylphenones absorb UV-LED light at 330 nm to 420nm or can be sensitized thioxanthones and provide though cure and accelerate the curing speed.

By "sensitized thioxanthones", it is meant that, for example, an α-aminoalkylphenone, such as 2-dimethylamino-2-(4-methyl-benzyl)-1-(4-morpholin-4-yl-phenyl)-butan-1-one, which can only absorb a small amount of LED light at wavelengths higher than 350 nm, can receive energy or electrons from a thioxanthone in its exited state and thus can act as a photoinitiator as well.

A non-limiting list of examples of suitable type I photoinitiators are diphenyl-(2,4,6-trimethylbenzoyl)-phosphine oxide, ethyl (2,4,6-trimethylbenzoyl) phenyl phosphinate, 2-benzyl-2-dimethylamino-1-(4-morpholinophenyl)-butan-1-one, 2-Dimethylamino-2-(4-methylbenzyl)-1-(4-morpholin-4-yl-phenyl)-butan-1-one and 2-methyl-1-[4(methoxythio)-phenyl]-2-morpholinopropan-2-one. Combinations of type I photoinitiators may also be used.

Type I- and type II-photoinitiators generate free radicals upon exposure to the curing energy UV-LED lamps emitting at wavelengths ranging from about 280-700 nanometers (nm). It is preferred that curing with UV-LED energy sources occur in the wavelength range of about 330-700 nm, more preferably 350-500 nm, more preferably 365-420 nm, more preferably 365-405 nm, more preferably 365-395 nm, and most preferably 385-395 nm.

Optionally, additional photoinitiators can be used which are either activated by UV-LED light in the range of about 330-420 nm, or can be sensitized by thioxanthones via energy transfer or electron transfer.

Colorants suited for inclusion in the present compositions include dyes or pigments of purple colors, blue colors, violet colors, violet-blue colors, colorants representing color variations in between, and combinations of colorants, which are able to offset, negate, minimize, and neutralize yellowing of the UV-LED coating composition.

By way of example, such dyes or pigments include Pigment Blue 1, Pigment Blue 2, Pigment violet 5, Pigment Blue 9, Pigment Blue 10, Pigment Blue 14, Pigment Blue 15, Pigment Blue 15: 1, Pigment Blue 15: 2, Pigment Blue 15: 3, Pigment Blue 15: 4, Pigment Blue 16, Pigment Blue 18, Pigment Blue 19, Pigment Blue 24, Pigment Blue 25, Pigment Blue 56, Pigment Blue 61, Pigment Blue 62, Pigment Blue 64, Pigment Blue 66, Pigment Violet 1, Pigment Violet 2, Pigment Violet 3, Pigment Violet 5:1, , Pigment Violet 13, Pigment Violet 19, Pigment violet 21, Pigment Violet 25, Pigment Violet 27, Pigment Violet 29, Pigment Violet 31, Pigment Violet 32, Pigment Violet 37, Pigment Violet 42, , Pigment Violet 44, Pigment Violet 50, and combinations thereof.

While pigments may be preferred over dyes, the latter can be effectively used as well. Suitable dyes include violet to blue dyes, such as, for example, Solvent Blue 104, crystal violet, and combinations thereof.

Including a pigment in the present compositions may be preferred. This is due to the high lightfastness offered by pigments in contrast to dyes and optical brighteners, which may decay over time

The colorant may be present in the described compositions in an amount of 0.001wt% to about 2.0wt%, preferably about 0.01wt% to about 2.0wt%, more preferably about 0.1wt% to about 1.0wt%, and even more preferably, 0.05wt% to about 0.5wt%, based on the total weight of the composition. Violet 23, which exhibits a high lightfastness, weathering stability and thermal stability, is a preferred pigment to include in the compositions.

Optical brighteners are used to make coatings appear whiter, brighter, and both whiter and brighter. Optical brighteners absorb invisible ultraviolet light and re-emit the absorbed energy as visible light in the blue range of the spectrum. The bluish color is complimentary to the yellow-orange color that is produced by thioxanthones and amine photoinitiator systems. Thus, optical brighteners participate in reducing yellowing. Optical brighteners are also used to turn a greyish hue into a bright white. Other kinds of optical brightening agents, fluorescent brightening agents, and fluorescent whitening agents may be used in the present coating compositions.

Suitable optical brighteners that may be used in the present compositions include those derived from building blocks that comprise a moiety selected from stilbene, triazine, thiazole, benzoxazole, coumarin, xanthene, triazole, oxazole, thiophene or pyrazoline. Preferred are 2,2'-(thiophenediyl)-bis-(t-butyl benzoxazole), 2-(stibyl-4")-(naphtho-1',2',4,5)-1,2,3-triazole-2"-sulfonic acid phenyl ester and 7-(4'-chloro-6"-diethylamino-l',3',5'-triazine-4'-yl)amino-3-phenyl coumarin, coumarin 1, 4'-diamino-2,2'-stilbenedisulfonic acid, 2,2'-(2,5-thiophenediyl)bis(5-tert-butylbenzoxazole), 2,2'-(1,2-ethenediyl)bis(4,1-phenylene)-bisbenz-oxazole, 4-methyl-umbelliferone, carbamide peroxides, and fluorescent pigments sold under the Xymara tradename (BASF). Particularly preferred are 2,2'-(1,2-ethenediyl)bis(4,1-phenylene)bisbenzoxazole and 7-diethylamino-4-methylcoumarin, commercially known as Coumarin 1. Other optical brighteners that may be used in the present coating compositions include those described in U.S. Patent Nos. 2,784,183 and 3,644,394.

The optical brightener may be present in the compositions in an amount of about 0.001wt% to about 2.0wt%, preferably about 0.01wt% to about 2.0wt%, more preferably, about 0.05wt% to about 1.0wt%, and even more preferably, about 0.05wt% to about 0.5wt%, based on the total weight of the compositions.

In some cases the efficiency of the optical brighteners may be enhanced by including polyethylene glycol and/or polyvinyl alcohol as additives in the compositions. Polyethylene glycol and/or polyvinyl alcohol may be included in the compositions in amounts of about 0.5wt% to about 2.5wt% (based on total composition weight). These additives may increase the visible blue light emissions.

In one aspect, the compound comprising one or more alpha beta-ethylenically unsaturated polymerizable double bonds is present in the composition in an amount of about 74wt% to about 99wt%, preferably about 74wt% to about 90wt%, and more preferably about 74wt% to about 85wt%, based on the total weight of the composition. In a preferred arrangement, the compound comprising one or more alpha beta-ethylenically unsaturated polymerizable double bonds is an acrylate compound, preferably a multi-functional acrylate.

In one aspect, the compound comprising one or more alpha beta-ethylenically unsaturated polymerizable double bonds comprises, in the composition, about 35wt%-60wt% of one or more multi-functional acrylate monomers and about 20wt% to about 35wt% of a further acrylate component selected from epoxy acrylates, polyester acrylate oligomers, polyurethane acrylate oligomers, and combinations thereof.

The thioxanthone component of the type II photoinitiator system is present in the composition in an amount of about 0.1wt% to about 10wt%, preferably about 1.0wt% to about 10wt%, more preferably about >1.0wt% to about 10wt%, and more preferably about >1.0wt% to about 5.0wt%.

In another aspect, the thioxanthone component of the type II photoinitiator system is present in the composition in amounts that vary based on the total weight of the composition. Such amounts include about 0.1wt% and greater, about 0.5wt% and greater, about 1.0wt% and greater, about 1.5wt% and greater, about 2.0wt% and greater, about 2.5wt% and greater, about 3.0wt% and greater, about 3.5wt% and greater, about 4.0wt% and greater, about 4.5wt% and greater, about 5.0wt% and greater, about 5.5wt% and greater, about 6.0wt% and greater, about 6.5wt% and greater, about 7.0wt% and greater, about 7.5wt% and greater, about 8.0wt% and greater, about 8.5wt% and greater, about 9.0wt% and greater, about 9.5wt% and greater, up to about 10wt% as an upper limit, and all amounts in between these values.

In another aspect, and to preferably obtain a complete and thorough cure, the thioxanthone component of the type II photoinitiator system is present in the composition in amounts, based on the total weight of the composition, that vary from greater than 1.0wt%. For example, the amount of thioxanthone may be greater than 1.0wt%, about 1.5wt% and greater, about 2.0wt% and greater, about 2.5wt% and greater, about 3.0wt% and greater, about 3.5wt% and greater, about 4.0wt% and greater, about 4.5wt% and greater, about 5.0wt% and greater, about 5.5wt% and greater, about 6.0wt% and greater, about 6.5wt% and greater, about 7.0wt% and greater, about 7.5wt% and greater, about 8.0wt% and greater, about 8.5wt% and greater, about 9.0wt% and greater, about 9.5wt% and greater, up to about 10wt% as an upper limit, and all amounts in between these values (i.e., > 1.wt% to about 10wt% thioxanthone, based on the total weight of the composition).

The amine component of the type II photoinitiator system is present in the composition in an amount of about 0.01wt% to about 15wt%, preferably about 1.0wt% to about 15wt%, and more preferably about 1.0wt% to about 10wt%, based on the total weight of the composition.

In one aspect, the type I photoinitiator, which may be one of or both of a phosphine oxide and an α-aminoalkylphenone, is present in the composition in an amount of about 0.05wt% to about 10wt%, preferably about 1.0wt% to about 10wt%, and more preferably about 1. 5wt% to about 10wt%, based on the total weight of the composition.

The colorant may be present in the described compositions in an amount of 0.001wt% to about 2.0wt%, preferably about 0.01wt% to about 2.0wt%, more preferably about 0.1wt% to about 1.0wt%, and even more preferably, 0.05wt% to about 0.5wt%, based on the total weight of the composition. In a preferred aspect, the colorant is a purple colorant, a violet colorant, a blue colorant, a violet-blue colorant, variations of colors in between, and combinations thereof. Violet 23, which exhibits a high lightfastness, weathering stability and thermal stability, is a preferred pigment to include in the compositions.

In one aspect, the optical brightener is present in the composition in an amount of about 0.001wt% to about 2.0wt%, preferably about 0.01wt% to about 2.0wt%, more preferably about 0.05wt% to about 1.0wt%, and even more preferably, about 0.05wt% to about 0.5wt%, based on the total weight of the composition.

The radiation curable inks and coatings of the present invention may further contain conventional additives to modify flow, foaming, surface tension, gloss, slip, scratch, and abrasion resistance. Such additives contained in coatings typically are surface-active agents, waxes, shelf-life stabilizers, etc. and combinations thereof. Some of these additives may function as leveling agents, shelf-life stabilizers, wetting agents, slip agents, flow agents, dispersants, defoamers and de-aerators. Preferred additives include fluorocarbon surfactants, silicones and organic polymer surfactants. Examples include the Tegorad^{™} product line (commercially available from Tego Chemie, Essen, Germany) and the Solsperse^{™} product lines (commercially available products of Lubrizol Company).

The coating compositions of the present invention can be cured with LED-light from about 330 nm to about 700 nm, preferably from about 350 nm to about 500 nm, and more preferably from about 365 nm to about 420 nm. Typical commercial UV-LED dryers used are air-cooled UV-LED or water-cooled UV-LED dryers and have a power of 8-20 Watts/cm² and a wavelength emission of 365-395 nm. The UV-LED light sources can be additionally equipped with mirrors and micro-optics to focus the light. Optionally, the environment in which curing occurs can be rendered inert by introducing nitrogen or carbon dioxide. UV-LED dryers are available from the companies such as Air Motion systems Inc., Phoseon Technology, Hamamatsu Corporation, Panasonic, UV Process Supply, IST Company, Hoenle Company and Heraeus Company. The amount of UV-LED irradiation can be measured with a calibrated radiometer before each curing run to determine that consistent LED curing conditions are attained. Such radiometers are available for example from EIT company and are specifically designed to accurately measure the area of 365-395nm.

After UV-LED curing, the yellowing of the coatings is measured with a spectral-photometer and the degree of cure is assessed by solvent resistance test, permanganate staining test, surface tackiness and gloss as described in the examples.

The coating compositions of the invention can be used in various ways, such as overprint varnishes applied to printed articles and materials; as clear coating compositions; as matte coatings compositions and as white coating compositions. They may be used as UV-LED curable printing inks, e.g., UV-LED curable lithographic sheet-fed inks; UV-LED curable flexographic inks; and UV-LED digital printing inks. The presently described coating compositions may also be used as UV-LED curable wood coatings and UV-LED curable (metal) coil coatings.

The presently described coating compositions may be applied to paper, cardboard, plastics, flexible packaging materials, glass, leather and metal, to name a few exemplary materials. They may be applied as protective coatings.

### EXAMPLES

The following examples illustrate specific aspects of the present invention and are not intended to limit the scope thereof in any respect and should not be so construed.

### Test methods:

### LED-Curing Test by Staining with Aqueous Potassium Permanganate Solution

Potassium permanganate reacts with unreacted double bonds, and yields a visible brown color as well. The extent of a curing reaction can be assessed with potassium permanganate. The brown color is more intense when more unreacted double bonds are present. Lower intensity of the brown color is indicative of more complete and thorough curing.

In the test, a drop of a 5% potassium permanganate solution in water is placed on the surface of a cured clear coat on top of a white opaque polypropylene film. The drop is left for 5 seconds and then removed with a cotton cloth. Optical density of the brown spot that forms is measured with a densitometer from Gretag Company and compared to a standard that can be prepared from a known formulation and acrylate group content applied to a substrate in a selected thickness (e.g., 4-6µm) and cured with a standard UV-LED dose, (e.g., 100 mJ/cm²). For the purposes of the present application, it is preferred that the optical density be ≤ 1.0. More preferred is ≤ 0.6, even more preferred is ≤ 0.5, and still even more preferred is ≤ 0.4.

### Solvent Resistance:

Solvent resistance is a measure for the degree of cure. The more solvent-resistant the coating, the better is the crosslink density and extent of cure. Solvent resistance is measured by rubbing the cured surface with a cloth soaked in methyl ethyl ketone (MEK) and loaded with a 500 g weight. The number of rubs is recorded when the first coating defect becomes visible. A test result of more than 40 or more rubs is considered to be a fully cured coating.

### Gloss:

Gloss is measured with a Micro gloss instrument from BYK Gardner Company at 60°.

### Yellowing (b-values):

In the L* a* b* color system (EN ISO 11664-4), the positive b*-values are a measure of the intensity of yellowing. b*-values were measured with a Spectro-eye spectral photometer from Gretag company. The lower the b*-value, the lower the yellowing. Yellowing corresponding to b*-values of 2 and less than 2 are hardly perceptible by a trained human eye.

### Viscosity:

Viscosity is measured with the cone & plate Rheometer Physika 300 from Anton Parr Company.

### Examples 1-9:

Colorant bases are provided by dispersing pigment Violet 23 and 2,2'-(1,2-ethenediyl)bis(4,1-phenylene)bisbenzoxazole (optical brightener ) in the same amount in weight of di-trimethylolpropane tetraacrylate (DiTMPTA) in a dissolver (that is, a mixing container equipped with a stirrer), followed by milling on a three roll mill. All other components are then added and mixing takes place in the dissolver.

The coating compositions are applied by a 4 micrometer spiral applicator on a white opaque polypropylene foil. Then, the coatings are cured with a 395 nm UV-LED bulb from Phoseon company (power: 8 Watt/cm²) with three passes. Each pass under the UV-LED bulb imparts a radiation dose of UVA light = 4 mJ/cm², UVA2 light = 32mJ/cm², UVV-light = 72mJ/cm² measured with a calibrated "power-puck" radiometer from EIT company. Compositions and test results are shown in Table 1 below.

| **Table 1: Example 1-9 Formulations** | | | | | | | | | |
|---|---|---|---|---|---|---|---|---|---|
| **Raw materials** | **Ex. 1* (Comp.)** | **Ex. 2** (Comp.)** | **Ex.3*** (Comp.)** | **Ex. 4 (Inv.)** | **Ex. 5 (Inv.)** | **Ex. 6 (Inv.)** | **Ex. 7 (Inv.)** | **Ex. 8 (Inv.)** | **Ex. 9 (Inv.)** |
| Trimethylolpropane triacrylate | 26.20 | 26.20 | 25.80 | 26.20 | 25.70 | 25.70 | 25.70 | 25.70 | 28.00 |
| Dipropylene glycol diacrylate | 20.00 | 19.90 | 20.00 | 20.00 | 19.50 | 19.20 | 20.00 | 20.00 | 25.00 |
| Bisphenol-A-diglycidylether-diacrylate | 32.00 | 32.00 | 30.00 | 32.00 | 30.40 | 30.00 | 30.00 | 30.00 | 30.40 |
| Aminoacrylate (adduct of GPTA and diethylamine) | 8.30 | 8.20 | 8.00 | 8.00 | 8.00 | 8.00 | 8.00 | 8.00 | 8.00 |
| Polymerization inhibitor | 0.30 | 0.30 | 0.30 | 0.30 | 0.30 | 0.30 | 0.30 | 0.30 | 0.30 |
| Defoamer | 0.20 | 0.20 | 0.20 | 0.20 | 0.20 | 0.20 | 0.20 | 0.20 | 0.20 |
| Optical brightener 2,2'-(1,2-ethenediyl)bis(4,1-phenylene)bisbenzoxazole | | 0.10 | 0.10 | 0.10 | 0.10 | 0.10 | 0.10 | 0.10 | 0.10 |
| Slip additive | 0.20 | 0.20 | 0.20 | 0.20 | 0.20 | 0.20 | 0.20 | 0.20 | 0.20 |
| Phenyl-bis(2,4,6-trimethyl-benzoyl)-phosphineoxide | 1.00 | 1.00 | 1.00 | 1.00 | 1.00 | 1.00 | 0.50 | 0.00 | 2.00 |
| Ethyl (2,4,6-trimethylbenzoyl) phenyl phosphinate | 5.00 | 5.00 | 5.00 | 5.00 | 5.00 | 5.00 | 6.00 | 6.00 | |
| 4,4'-bis(diethylamino)-benzophenone (EMK) | | | 6.00 | | | | | | |
| 2-Isopropylthioxanthone (ITX) | 2.60 | 2.60 | | 2.60 | 3.10 | 3.70 | 3.00 | 3.00 | 2.00 |
| Benzophenone (BPz) | | | 3.00 | | | | | | |
| Ethyl-N,N- dimethylaminobenzoate (EDB) | 4.00 | 4.00 | 0.00 | 4.00 | 6.00 | 6.00 | 5.50 | 6.00 | 3.50 |
| Colorant: Pigment Violet 23 | | | 0.20 | 0.20 | 0.25 | 0.30 | 0.25 | 0.15 | 0.2 |
| Ditrimethylolpropane tetraacrylate (DITMPTA) | 0.20 | 0.20 | 0.20 | 0.20 | 0.25 | 0.30 | 0.25 | 0.25 | 0.15 |
| **Total** | **100.0** | **100.0** | **100.0** | **100.0** | **100.0** | **100.0** | **100.0** | **100.0** | **100.0** |
| Viscosity [mPas@25°C, shear rate D = 50 1/s] | 188 | 195 | 173 | 195 | 179 | 192 | 186 | 196 | 179 |
| Staining test with KMnO4 [optical density] | 0.35 | 0.43 | 0.34 | 0.32 | 0.41 | 0.35 | 0.41 | 0.36 | 0.52 |
| Surface dryness after three passes | dry | dry | dry | dry | dry | dry | dry | dry | dry |
| Solvent resistance [number of MEK double rubs] | >40 | >40 | >40 | >40 | >40 | >40 | >40 | >40 | >40 |
| Yellowing assessed by eye | very strong | strong | strong | none | none | none | none | minimal | none |
| Gloss 60° [units] | 94 | 94 | 95 | 94 | 96 | 97 | 94 | 96 | 95 |
| Yellowing index b*-value [units] | 13.1 | 9.5 | 7.9 | 1.0 | 0.7 | 0.6 | 0.8 | 1.9 | 0.7 |

| | | | | | | | | | |
|---|---|---|---|---|---|---|---|---|---|
| (Comp.) = Comparative Example; (Inv.) = Inventive Example; *without colorant and optical brightener (comparative); **without colorant (comparative); ***with 4,4'-diethylaminobenzophenone (comparative). | | | | | | | | | |

In Comparative Examples 1-3 (CE 1 without colorant and optical brightener; CE 2 without colorant; and CE 3 with colorant and optical brightener but with 4,4'-diethylaminobenzophenone), very strong to strong yellowing is observed, as evidenced by the b*-values of 13.1, 9.5, and 7.9 respectively. In the inventive Examples 4-9, no visible yellowing is observed (all b*-values < 2) (a minimal yellowing was seen in Example 8). Aside from yellowing, all of the other assessed properties are about equivalent to each other across the comparative and inventive examples.

### Examples 10-13:

In Examples 10-13, diethylthioxanthone (DETX) is the type II photoinitiator component and Coumarin 1 is the optical brightener. The coatings were prepared and cured in the same manner as described for the coatings of the examples in Table 1. The compositions and results are set forth in Table 2 below.

| **Table 2: Example 10-13 Formulations** | | | | |
|---|---|---|---|---|
| **Raw materials** | **Ex. 10 (Inv.)** | **Ex. 11 (Inv.)** | **Ex. 12 (Inv.)** | **Ex. 13 (Inv.)** |
| Trimethylolpropane triacrylate | 27.00 | 26.00 | 26.50 | 24.80 |
| Dipropylene glycol diacrylate | 24.00 | 22.70 | 22.00 | 22.00 |
| Bisphenol-A-diglycidylether-diacrylate | 32.00 | 32.00 | 30.00 | 32.00 |
| Aminoacrylate CN386 ( Arkema company) | *7.70* | 8.00 | 8.00 | 8.00 |
| Polymerization inhibitor | 0.30 | 0.30 | 0.30 | 0.30 |
| Defoamer | 0.20 | 0.20 | 0.20 | 0.20 |
| Coumarin 1 | 0.10 | 0.10 | 0.10 | 0.10 |
| Slip additive | 0.20 | 0.20 | 0.20 | 0.20 |
| Ethyl (2,4,6-trimethylbenzoyl) phenyl phosphinate (TPO-L) | 3.00 | 2.00 | 2.00 | 7.00 |
| 2-benzyl-2-dimethylamino-1-(4-morpholinophenyl)-butan-1-one | 0.00 | 1.00 | 1.00 | 1.00 |
| Diethylthioxanthone (DETX) | 2.00 | 2.00 | 3.00 | 1.00 |
| Ethyl-N,N- dimethylaminobenzoate (EDB) | 3.00 | 5.00 | 6.00 | 3.00 |
| Colorant: Pigment Violet 23 | 0.3 | 0.3 | 0.50 | 0.20 |
| Ditrimethylolpropane tetraacrylate (DITMPTA) | 0.20 | 0.20 | 0.20 | 0.20 |
| **Total** | **100.00** | **100.00** | **100.00** | **100.00** |
| Viscosity [mPas@25°C, shear rate D = 50 1/s] | 185 | 174 | 173 | 193 |

| LED-curing test with staining with KMnO4 [optical density] | | | | |
|---|---|---|---|---|
| 1 pass | 0.92 | 1.03 | 0.94 | 1.14 |
| 2 passes | 0.72 | 0.69 | 0.53 | 0.77 |
| 3 passes | 0.48 | 0.43 | 0,50 | 0.50 |
| 4 passes | 0.34 | 0.32 | 0.30 | 0.38 |
| Surface dryness | dry | dry | dry | dry |
| Solvent resistance [number of MEK double rubs] | >40 | >40 | >40 | >40 |
| Yellowing assessed by eye | none | none | minimal | none |
| Gloss 60° [units] | 95 | 96 | 96 | 94 |
| Yellowing index b*-value [units] | 0.41 | 0.56 | 1.80 | 0.29 |

Examples 10-13 show that alternative thioxanthone derivatives and alternative optical brighteners and α-aminoalkylphenones exhibit comparable properties to those of the Table 1 examples, and that Examples 10,11 and 13 exhibit b*-values less than 1.

### Example 14: Press Trial on a LED Rapida 106 Sheet-Fed Press from KBA Company, Equipped with a Flexographic Coater (Overprint Varnish (OPV)

The coating from example 12 was pumped from a 20 Kg pail into the flexo coating unit equipped with an Anilox roller (80 lines per cm). The temperature in the coating unit is varied with hot air or infrared irradiation. The coating is applied over a 4-color print of Sun Chemical LED inks. After application, the coating is dried with an XP LED dryer from Air motion systems company (AMS), emitting at a peak wavelength of 385 nm. Besides the LED-dryer, the end cure can be enhanced by a low energy (HUV) UV-dryer working with an iron-doped bulb. The speed of the press was adjusted to 10,000 sheets per hour. After cure the prints were inspected for cure and gloss.

| Drying with | 1 LED dryer@ 80% power | 2 LED dryers @80% power | 1 LED dryer @80% + IR 36°C | 1 **LED dryer** @80% + HUV dryer @50% |
|---|---|---|---|---|
| Gloss (60 °)* | 83 | 87 | 86 | 87 |
| Surface cure | Dry (no slip) | Dry (high slip) | Dry (high slip) | Dry (high slip) |
| Finger-nail scratch | Poor-medium | good | good | good |
| Gloss (60°) after 24 h | 80 | 84 | 81 | 82 |
| Finger-nail scratch after 24h | good | good | good | good |

| | | | | |
|---|---|---|---|---|
| *Measured with a Microgloss glossmeter from BYK | | | | |

The trial indicates that the LED coating can be dried at a speed of 10,000 sheets per hour.

### Example 15

50wt% of pigment Violet 23 was replaced by dye Solvent Blue 104 (Solvaperm blue 2B-CN from Clariant company) in the coating of Example 4. The coating was prepared and LED-cured in the same way as described for the coatings of the examples of Table 1. A yellowing index of b* = 1.85 units was measured with a calibrated "Spectro-eye" spectral photometer from Gretag company.

## Claims

1. A UV light curable coating composition comprising:
a compound including one or more alpha beta-ethylenically unsaturated polymerizable double bonds;
a type II photoinitiator system comprised of a thioxanthone and an amine, wherein the thioxanthone component of the type II photoinitiator system is present in the composition in an amount of 0. 1wt% to 10wt% and the amine component of the type II photoinitiator system is present in the composition in an amount of 0.01wt% to 15wt%;
a colorant; and
an optical brightener.

2. The UV light curable coating composition of claim 1, further comprising a type I photoinitiator selected from a phosphine oxide, an α-aminoalkylphenone, and combinations thereof.

3. The UV light curable coating composition of any preceding claim, wherein the colorant is one that offsets yellowing of the composition; preferably wherein the colorant is select from a purple colorant, a violet colorant, a blue colorant, a violet-blue colorant, colors representing color variations in between, and combinations thereof.

4. The UV light curable coating composition of any preceding claim, wherein the compound including one or more alpha beta-ethylenically unsaturated polymerizable double bonds is selected from acrylates, methacrylates, vinyls, vinylethers, acrylamides, and combinations thereof; preferably wherein the compound including one or more alpha beta-ethylenically unsaturated polymerizable double bonds is an acrylate compound, and more preferably a multi-functional acrylate

5. The UV light curable coating composition of any preceding claim, wherein the compound including one or more alpha beta-ethylenically unsaturated polymerizable double bonds is selected from n-octyl acrylate, iso-octyl acrylate, n-decyl acrylate, lauryl acrylate, stearyl acrylate, ethylene glycol diacrylate, 1,4-butandiol diacrylate, 1,6-hexandiol diacrylate, dipropylene glycol diacrylate, neopentylglycol diacrylate, ethoxylated neopentylglycol diacrylates, propoxylated neopentylglycol diacrylates, tripropylene glycol diacrylate, bisphenol A diacrylate, ethoxylated bisphenol A diacrylates, bisphenol A diglycidylether diacrylate, ethoxylated bisphenol A diacrylates, poly(ethylene)glycol diacrylates, trimethylolpropane triacrylate, ethoxylated trimethylolpropane triacrylates, propoxylated trimethylolpropane triacrylates, propoxylated glycerol triacrylates, pentaerythritol triacrylate, ethoxylated pentaerythritol triacrylates, propoxylated pentaerythritol tetraacrylates, ethoxylated pentaerythritol tetraacrylates, ditrimethylolpropane tetraacrylate, dipentaerythritol pentaacrylate, dipentaerythritol hexaacrylate, oligomeric acrylate, polymeric acrylates, epoxy acrylates, polyester acrylates, acrylated polyurethanes, acrylated polyacrylates, acrylated polyethers, acrylated polyamines, acrylated epoxidized oils derived from linseed oil and soybean oil, and combinations thereof.

6. The UV light curable coating composition of any preceding claim, wherein the thioxanthone is selected from 2-isopropylthioxanthone, 4-isopropylthioxanthone, 2,4-dimethylthioxanthone, 2,4-diethylthioxanthone, 2,4-diisopropylthioxanthone, 2-chlorothixanthone, 2-chloro-4-isopropoxythixanthone, oligomeric thioxanthones for low migration applications having a molecular weight of 500 Daltons or less, and combinations thereof and/or wherein the amine is selected from 2-(dimethylamino) ethyl benzoate, ethyl-4-dimethylamino benzoate, 2-ethylhexyl-4-dimethylamino benzoate, isoamyl-4-dimethylamino benzoate, butoxyethyl-4-dimethylamino benzoate, an amino-modified acrylate resin or oligomeric aminobenzoates, oligomeric thioxanthones for low migration applications having a molecular weight of 500 Daltons or less, and combinations thereof.

7. The UV light curable coating composition of any one of claims 2-6, wherein the phosphine oxide is selected from diphenyl-(2,4,6-trimethylbenzoyl)-phosphine oxide, ethyl (2,4,6-trimethylbenzoyl) phenyl phosphinate, phenyl-bis(2,4,6-trimethylbenzoyl)-phosphine oxide, and combinations thereof and/or wherein the α-aminoalkylphenone is selected from benzyl-2-dimethylamino-1-(4-morpholinophenyl)-butan-1-one, 2-dimethylamino-2-(4-methyl-benzyl)-1-(4-morpholin-4-yl-phenyl)-butan-1-one, 2-methyl-1-[4-(methoxythio)-phenyl]-2-morpholinopropan-2-one, and combinations thereof.

8. The UV light curable coating composition of any preceding claim, wherein the colorant is selected from Pigment Blue 1, Pigment Blue 2, Pigment violet 5, Pigment Blue 9, Pigment Blue 10, Pigment Blue 14, Pigment Blue 15, Pigment Blue 15:1, Pigment Blue 15:2, Pigment Blue 15:3, Pigment Blue 15:4, Pigment Blue 16, Pigment Blue 18, Pigment Blue 19, Pigment Blue 24, Pigment Blue 25, Pigment Blue 56, Pigment Blue 61, Pigment Blue 62, Pigment Blue 64, Pigment Blue 66, Solvent Blue 104, Pigment Violet 1, Pigment Violet 2, Pigment Violet 3, Pigment Violet 5:1, Pigment Violet 13, Pigment Violet 19, Pigment Violet 21, Pigment Violet 23, Pigment Violet 25, Pigment Violet 27, Pigment Violet 29, Pigment Violet 31, Pigment Violet 32, Pigment Violet 37, Pigment Violet 42, Pigment Violet 44, Pigment Violet 50, and combinations thereof.

9. The UV light curable coating composition of any one of claims 1 - 8, wherein the optical brightener comprises a moiety selected from stilbene, triazine, thiazole, benzoxazole, coumarin, xanthene, triazole, oxazole, thiophene, pyrazoline, and combinations thereof, preferably the optical brightener is selected from 2,2'-(thiophenediyl)-bis-(t-butyl benzoxazole), 2-(stibyl-4")-(naphtho-1',2',4,5)-1,2,3-triazole-2"-sulfonic acid phenyl ester, 7-(4'-chloro-6"-diethylamino-1',3',5'-triazine-4'-yl )amino-3-phenyl coumarin, coumarin 1, 4'-diamino-2,2'-stilbenedisulfonic acid, 2,2'-(2,5-thiophenediyl)bis(5-tert-butylbenzoxazole), 2,2'-(1,2-ethenediyl)bis(4,1-phenylene)-bisbenzoxazole, 4-methyl-umbelliferone or carbamide peroxide, more preferably the optical brightener is selected from 2,2'-(1,2-ethenediyl)bis(4,1-phenylene)-bisbenzoxazole or coumarin 1.

10. The UV light curable coating composition of any preceding claim, wherein the cured coating exhibits a b* value of ≤ 5, preferably ≤ 4, more preferably ≤3, even more preferably ≤ 2, and still even more preferably ≤ 1 and/or wherein the cured coating exhibits an optical density, after being treated with a 5% aqueous potassium permanganate solution for 5 seconds, of ≤ 1, preferably ≤ 0.6, more preferably ≤ 0.5, and even more preferably ≤ 0.4.

11. The UV light curable coating composition of any preceding claim, wherein the compound including one or more alpha beta-ethylenically unsaturated polymerizable double bonds is present in the composition in an amount of 74wt% to 99wt%, preferably 74wt% to 90wt%, and more preferably 74wt% to 85wt% and/or wherein the thioxanthone component of the type II photoinitiator system is present in the composition in an amount of 1.0wt% to 10wt%, and more preferably 1.0wt% to 5.0wt% and/or wherein the amine component of the type II photoinitiator system is present in the composition in an amount of 1.0wt% to 15wt%, and more preferably 1.0wt% to 10wt% and/or wherein the colorant is present in the composition in an amount of 0.001wt% to 2.0wt%, preferably 0.01wt% to 2.0wt%, more preferably 0.1wt% to 1.0wt%, and even more preferably, 0.05wt% to 0.5wt%, based on the total weight of the composition.

12. The UV light curable coating composition of any preceding claim, wherein the thioxanthone component of the type II photoinitiator system is present in the composition in an amount of 0.5wt% and greater, 1.0wt% and greater, 1.5wt% and greater, 2.0wt% and greater, 2.5wt% and greater, 3.0wt% and greater, 3.5wt% and greater, 4.0wt% and greater, 4.5wt% and greater, 5.0wt% and greater, 5.5wt% and greater, 6.0wt% and greater, 6.5wt% and greater, 7.0wt% and greater, 7.5wt% and greater, 8.0wt% and greater, 8.5wt% and greater, 9.0wt% and greater, 9.5wt% and greater, up to 10wt% as an upper limit, and amounts in between these values; preferably wherein the thioxanthone component of the type II photoinitiator system is present in the composition in an amount greater than 1.0wt%, 1.5wt% and greater, 2.0wt% and greater, 2.5wt% and greater, 3.0wt% and greater, 3.5wt% and greater, 4.0wt% and greater, 4.5wt% and greater, 5.0wt% and greater, 5.5wt% and greater, 6.0wt% and greater, 6.5wt% and greater, 7.0wt% and greater, 7.5wt% and greater, 8.0wt% and greater, 8.5wt% and greater, 9.0wt% and greater, 9.5wt% and greater, up to 10wt% as an upper limit, and all amounts in between these values.

13. The UV light curable coating composition of any one of claims 2 - 12, wherein the type I photoinitiator is present in the composition in an amount of 0.05wt% to 10wt%, preferably 1.0wt% to 10wt%, and more preferably 1.5wt% to 10wt% and/or wherein the optical brightener is present in the composition in an amount of 0.001wt% to 2.0wt%, preferably 0.01wt% to 2.0wt%, more preferably 0.05wt% to 1.0wt%, and even more preferably, 0.05wt% to 0.5wt%.

14. The UV light curable coating composition of any preceding claim, wherein the compound having one or more alpha beta-ethylenically unsaturated polymerizable double bonds comprises, in the composition, 35wt% to 60% of one or more multi-functional acrylate monomers, and 20wt% to 35wt% of a further acrylate component selected from epoxy acrylates, polyester acrylate oligomers, polyurethane acrylate oligomers, and combinations thereof and/or wherein the compound having one or more alpha beta-ethylenically unsaturated polymerizable double bonds comprises, in the composition, 5wt% to 20% amino acrylates.

15. The UV light curable coating composition of any preceding claim, wherein the composition is curable by exposure to actinic light selected from UV-LED light, UV light provided by a low pressure mercury bulb, UV light provided by a medium-pressure mercury arc bulb, UV light provided by a xenon arc bulb, UV light provided by a metal halide bulb, UV light provided by an excimer bulb, UV light provided by sunlight from 250-700 nm, and combinations thereof or wherein the composition is capable of cure by UV-LED light alone.

16. The UV light curable coating composition of any preceding claim, wherein the composition is capable of cure by exposure to UV-LED light in the range of 330-700 nm, more preferably 350-500 nm, more preferably 365-420 nm, more preferably 365-405 nm, more preferably 365-395 nm, and most preferably 385-395 nm.

17. A method of offsetting the yellowing of a UV-curable coating composition that occurs to the composition upon exposure to curing UV light, comprising the steps of:
providing a composition comprising:
one or more alpha beta-ethylenically unsaturated polymerizable double bonds, and
a type II photoinitiator system comprised of a thioxanthone and an amine wherein the thioxanthone component of the type II photoinitiator system is present in the composition in an amount of 0. 1wt% to 10wt% and the amine component of the type II photoinitiator system is present in the composition in an amount of 0.01wt% to 15wt%;
curing the composition with UV light to provide a cured composition;
performing an analysis of the b*-values of the color of the cured composition to determine the extent of yellowing;
selecting, based on the analysis, a colorant that will minimize yellowing;
adding the selected colorant to the composition to provide a colorant-including composition;
including an optical brightener in the colorant-including composition;
curing the colorant-including composition with UV light to provide a colorant-including cured composition; and
performing an analysis of the b*-values of the color of the colorant-including cured composition to determine the extent of yellowing, wherein a colorant-including cured composition in which yellowing is offset is provided.

18. A printed article comprising:
a substrate;
the UV light curable coating composition of any one of claims 1-16, which has been cured by exposure to UV light; preferably further comprising an ink layer.

19. A printed article of claim 18 comprising:
a substrate;
an ink layer;
an overprint varnish layer comprised of the UV light curable coating composition of any one of claims 1-16, which has been cured by exposure to UV light.

## Patentansprüche

1. UV-Licht-härtbare Beschichtungszusammensetzung umfassend:
eine Verbindung, die eine oder mehrere alpha-beta-ethylenisch ungesättigte polymerisierbare Doppelbindungen enthält;
ein Typ-II-Photoinitiatorsystem, das aus einem Thioxanthon und einem Amin besteht, wobei die Thioxanthonkomponente des Typ-II-Photoinitiatorsystems in der Zusammensetzung in einer Menge von 0,1 Gew.-% bis 10 Gew.-% vorhanden ist und die Aminkomponente des Typ-II-Photoinitiatorsystems in der Zusammensetzung in einer Menge von 0,01 Gew.-% bis 15 Gew.-% vorhanden ist;
ein Farbmittel; und
einen optischen Aufheller.

2. UV-Licht-härtbare Beschichtungszusammensetzung nach Anspruch 1, ferner umfassend einen Typ-I-Photoinitiator ausgewählt aus einem Phosphinoxid, einem α-Aminoalkylphenon und Kombinationen davon.

3. UV-Licht-härtbare Beschichtungszusammensetzung nach einem der vorstehenden Ansprüche, wobei das Farbmittel ein Farbmittel ist, das Vergilbung der Zusammensetzung kompensiert; wobei das Farbmittel vorzugsweise ausgewählt ist aus einem lila Farbmittel, einem violetten Farbmittel, einem blauen Farbmittel, einem violettblauen Farbmittel, Farben, die Farbvariationen dazwischen darstellen, und Kombinationen davon.

4. UV-Licht-härtbare Beschichtungszusammensetzung nach einem der vorstehenden Ansprüche, wobei die Verbindung, die eine oder mehrere alpha-beta-ethylenisch ungesättigte polymerisierbare Doppelbindungen enthält, ausgewählt ist aus Acrylaten, Methacrylaten, Vinylen, Vinylethern, Acrylamiden und Kombinationen davon; wobei die Verbindung, die eine oder mehrere alpha-beta-ethylenisch ungesättigte polymerisierbare Doppelbindungen enthält, vorzugsweise eine Acrylatverbindung und bevorzugter ein multifunktionelles Acrylat ist.

5. UV-Licht-härtbare Beschichtungszusammensetzung nach einem der vorstehenden Ansprüche, wobei die Verbindung, die eine oder mehrere alpha-beta-ethylenisch ungesättigte polymerisierbare Doppelbindungen enthält, ausgewählt ist aus n-Octylacrylat, iso-Octylacrylat, n-Decylacrylat, Laurylacrylat, Stearylacrylat, Ethylenglycoldiacrylat, 1,4-Butandioldiacrylat, 1,6-Hexandioldiacrylat, Dipropylenglycoldiacrylat, Neopentylglycoldiacrylat, ethoxylierten Neopentylglycoldiacrylaten, propoxylierten Neopentylglycoldiacrylaten, Tripropylenglycoldiacrylat, Bisphenol-A-diacrylat, ethoxylierten Bisphenol-A-diacrylaten, Bisphenol-A-diglycidyletherdiacrylat, ethoxylierten Bisphenol-A-diacrylaten, Poly(Ethylen)glycoldiacrylaten, Trimethylolpropantriacrylat, ethoxylierten Trimethylolpropantriacrylaten, propoxylierten Trimethylolpropantriacrylaten, propoxylierten Glycerintriacrylaten, Pentaerythrittriacrylat, ethoxylierten Pentaerythrittriacrylaten, propoxylierten Pentaerythrittetraacrylaten, ethoxylierten Pentaerythrittetraacrylaten, Ditrimethylolpropantetraacrylat, Dipentaerythritpentaacrylat, Dipentaerythrithexaacrylat, oligomerem Acrylat, polymeren Acrylaten, Epoxyacrylaten, Polyesteracrylaten,
acrylierten Polyurethanen, acrylierten Polyacrylaten, acrylierten Polyethern, acrylierten Polyaminen, acrylierten epoxidierten Ölen, die von Leinöl und Sojabohnenöl abgeleitet sind, und Kombinationen davon.

6. UV-Licht-härtbare Beschichtungszusammensetzung nach einem der vorstehenden Ansprüche, wobei das Thioxanthon ausgewählt ist aus 2-Isopropylthioxanthon, 4-Isopropylthioxanthon, 2,4-Dimethylthioxanthon, 2,4-Diethylthioxanthon, 2,4-Diisopropylthioxanthon, 2-Chlorthixanthon, 2-Chlor-4-isopropoxythixanthon, oligomeren Thioxanthonen für Anwendungen mit niedriger Migration mit einem Molekulargewicht von 500 Dalton oder weniger und Kombinationen davon, und/oder wobei das Amin ausgewählt ist aus 2-(Dimethylamino)ethylbenzoat, Ethyl-4-dimethylaminobenzoat, 2-Ethylhexyl-4-dimethylaminobenzoat, Isoamyl-4-dimethoxylaminobenzoat, 4-dimethylaminobutylat, ein aminomodifiziertes Acrylatharz oder oligomeren Aminobenzoaten, oligomeren Thioxanthonen für Anwendungen mit niedriger Migration mit einem Molekulargewicht von 500 Dalton oder weniger und Kombinationen davon.

7. UV-Licht-härtbare Beschichtungszusammensetzung nach einem der Ansprüche 2-6, wobei das Phosphinoxid ausgewählt ist aus Diphenyl(2,4,6-trimethylbenzoyl)phosphinoxid, Ethyl(2,4,6-trimethylbenzoyl)phenylphosphinat, Phenylbis(2,4,6-trimethylbenzoyl)phosphinoxid und Kombinationen davon, und/oder wobei das α-Aminoalkylphenon ausgewählt ist aus Benzyl-2-dimethylamino-1-(4-morpholinophenyl)butan-1-on, 2-Dimethylamino-2-(4-methylbenzyl)-1-(4-morpholin-4-yl-phenyl)butan-1-on, 2-Methyl-1-[4-(methoxythio)phenyl]-2-morpholinopropan-2-on und Kombinationen davon.

8. UV-Licht-härtbare Beschichtungszusammensetzung nach einem der vorstehenden Ansprüche, wobei das Farbmittel ausgewählt ist aus Pigment Blue 1, Pigment Blue 2, Pigment Violet 5, Pigment Blue 9, Pigment Blue 10, Pigment Blue 14, Pigment Blue 15, Pigment Blue 15:1, Pigment Blue 15:2, Pigment Blue 15:3, Pigment Blau 15:4, Pigment Blau 16, Pigment Blau 18, Pigment Blau 19, Pigment Blau 24, Pigment Blue 25, Pigment Blue 56, Pigment Blue 61, Pigment Blue 62, Pigment Blue 64, Pigment Blue 66, Solvent Blue 104, Pigment Violet 1, Pigment Violet 2, Pigment Violet 3, Pigment Violet 5:1, Pigment Violet 13, Pigment Violet 19, Pigment Violet 21, Pigment Violet 23, Pigment Violet 25, Pigment Violet 27, Pigment Violet 29, Pigment Violet 31, Pigment Violet 32, Pigment Violet 37, Pigment Violet 42, Pigment Violet 44, Pigment Violet 50 und Kombinationen davon.

9. UV-Licht-härtbare Beschichtungszusammensetzung nach einem der Ansprüche 1 bis 8, wobei der optische Aufheller eine Einheit umfasst, die ausgewählt ist aus Stilben, Triazin, Thiazol, Benzoxazol, Cumarin, Xanthen, Triazol, Oxazol, Thiophen, Pyrazolin, wobei der optische Aufheller vorzugsweise ausgewählt ist aus 2,2'-(Thiophenediyl)-bis(t-butylbenzoxazol), 2-(Stibyl-4")-(naphtho-1',2',4,5)-1,2,3-triazol-2"-sulfonsäurephenylester, 7-(4'-Chlor-6"-diethylamino-1',3',5'-triazin-4'-yl)amino-3-phenylcoumarin, Coumarin 1, 4'-Diamino-2,2'-stilbendisulfonsäure, 2,2'-(2,5-Thiophendiyl)bis(5-tert-butylbenzoxazol), 2,2'-(1,2-Ethendiyl)bis(4,1-phenylen)bisbenzoxazol, 4-Methylumbelliferon oder Carbamidperoxid, wobei der optische Aufheller bevorzugter ausgewählt ist aus 2,2'-(1,2-Ethendiyl)bis(4,1-phenylen)bisbenzoxazol oder Coumarin 1.

10. UV-Licht-härtbare Beschichtungszusammensetzung nach einem der vorstehenden Ansprüche, wobei die gehärtete Beschichtung einen b*-Wert von ≤ 5, vorzugsweise ≤ 4, bevorzugter ≤ 3, noch bevorzugter ≤ 2 und noch bevorzugter ≤ 1 aufweist und/oder wobei die gehärtete Beschichtung eine optische Dichte, nachdem sie 5 Sekunden mit einer 5-%-igen wässrigen Kaliumpermanganatlösung behandelt worden ist, von ≤ 1, vorzugsweise ≤ 0,6, bevorzugter ≤ 0,5 und noch bevorzugter ≤ 0,4, aufweist.

11. UV-Licht-härtbare Beschichtungszusammensetzung nach einem der vorstehenden Ansprüche, wobei die Verbindung, die eine oder mehrere alpha-beta-ethylenisch ungesättigte polymerisierbare Doppelbindungen enthält, in der Zusammensetzung in einer Menge von 74 Gew.-% bis 99 Gew.-%, vorzugsweise 74 Gew.-% bis 90 Gew.-% und bevorzugter 74 Gew.-% bis 85 Gew.-% vorhanden ist und/oder wobei die Thioxanthonkomponente des Typ-II-Photoinitiatorsystems in der Zusammensetzung in einer Menge von 1,0 Gew.-% bis 10 Gew.-% und bevorzugter 1,0 Gew.-% bis 5,0 Gew.-% vorhanden ist und/oder wobei die Aminkomponente des Typ-II-Photoinitiatorsystems in der Zusammensetzung in einer Menge von 1,0 Gew.-% bis 15 Gew.-% und bevorzugter 1,0 Gew.-% bis 10 Gew.-% vorhanden ist und/oder wobei das Farbmittel in der Zusammensetzung in einer Menge von 0,001 Gew.-% bis 2,0 Gew.-%, vorzugsweise 0,01 Gew.-% bis 2,0 Gew.-%, bevorzugter 0,1 Gew.-% bis 1,0 Gew.-% und sogar noch bevorzugter 0,05 Gew.-% bis 0,5 Gew.-%, bezogen auf Gesamtgewicht der Zusammensetzung, vorhanden ist.

12. UV-Licht-härtbare Beschichtungszusammensetzung nach einem der vorstehenden Ansprüche, wobei die Thioxanthonkomponente des Typ-II-Photoinitiatorsystems in der Zusammensetzung in einer Menge von 0,5 Gew.-% und größer, 1,0 Gew.-% und größer, 1,5 Gew.-% und größer, 2,0 Gew.-% und größer, 2,5 Gew.-% und größer, 3,0 Gew.-% und größer, 3,5 Gew.-% und größer, 4,0 Gew.-% und größer, 4,5 Gew.-% und größer, 5,0 Gew.-% und größer, 5,5 Gew.-% und größer, 6,0 Gew.-% und größer, 6,5 Gew.-% und größer, 7,0 Gew.-% und größer, 7,5 Gew.-% und größer, 8,0 Gew.-% und größer, 8,5 Gew.-% und größer, 9,0 Gew.-% und größer, 9,5 Gew.-% und größer, bis zu 10 Gew.-% als obere Grenze, und Mengen zwischen diesen Werten vorhanden ist; vorzugsweise wobei die Thioxanthonkomponente des Typ-II-Photoinitiatorsystems in der Zusammensetzung in einer Menge größer als 1,0 Gew.-%, 1,5 Gew.-% und größer, 2,0 Gew.-% und größer, 2,5 Gew.-% und größer, 3,0 Gew.-% und größer, 3,5 Gew.-% und größer, 4,0 Gew.-% und größer, 4,5 Gew.-% und größer, 5,0 Gew.-% und größer, 5,5 Gew.-% und größer, 6,0 Gew.-% und größer, 6,5 Gew.-% und größer, 7,0 Gew.-% und größer, 7,5 Gew.-% und größer, 8,0 Gew.-% und größer, 8,5 Gew.-% und größer, 9,0 Gew.-% und größer, 9,5 Gew.-% und größer, bis zu 10 Gew.-% als obere Grenze, und alle Mengen zwischen diesen Werten, vorhanden ist.

13. UV-Licht-härtbare Beschichtungszusammensetzung nach einem der Ansprüche 2-12, wobei der Typ-I-Photoinitiator in der Zusammensetzung in einer Menge von 0,05 Gew.-% bis 10 Gew.-%, vorzugsweise 1,0 Gew.-% bis 10 Gew.-% und bevorzugter 1,5 Gew.-% bis 10 Gew.-% vorhanden ist und/oder wobei der optische Aufheller in der Zusammensetzung in einer Menge von 0,001 Gew.-% bis 2,0 Gew.-%, vorzugsweise 0,01 Gew.-% bis 2,0 Gew.-%, bevorzugter 0,05 Gew.-% bis 1,0 Gew.-% und sogar noch bevorzugter 0,05 Gew.-% bis 0,5 Gew.-% vorhanden ist.

14. UV-Licht-härtbare Beschichtungszusammensetzung nach einem der vorstehenden Ansprüche, wobei die Verbindung mit einer oder mehreren alpha-beta-ethylenisch ungesättigten polymerisierbaren Doppelbindungen in der Zusammensetzung 35 Gew.-% bis 60 Gew.-% an einem oder mehreren multifunktionellen Acrylatmonomeren und 20 Gew.-% bis 35 Gew.-% an einer weiteren Acrylatkomponente ausgewählt aus Epoxyacrylaten, Polyesteracrylatoligomeren, Polyurethanacrylatoligomeren und Kombinationen davon umfasst und/oder wobei die Verbindung mit einer oder mehreren alpha-beta-ethylenisch ungesättigten polymerisierbaren Doppelbindungen in der Zusammensetzung 5 Gew.-% bis 20 Gew.-% Aminoacrylate umfasst.

15. UV-Licht-härtbare Beschichtungszusammensetzung nach einem der vorstehenden Ansprüche, wobei die Zusammensetzung durch Exposition gegenüber aktinischem Licht ausgewählt aus UV-LED-Licht, UV-Licht, bereitgestellt durch eine Niederdruck-Quecksilberlampe, UV-Licht, bereitgestellt durch eine Mitteldruck-Quecksilberlampe, UV-Licht, bereitgestellt durch eine Xenonbogenlampe, UV-Licht, bereitgestellt durch eine Metallhalogenidlampe, UV-Licht, bereitgestellt durch eine Excimerlampe, UV-Licht, bereitgestellt durch Sonnenlicht von 250-700 nm, und Kombinationen davon härtbar ist oder wobei die Zusammensetzung fähig ist, durch UV-LED-Licht allein zu härten.

16. UV-Licht-härtbare Beschichtungszusammensetzung nach einem der vorstehenden Ansprüche, wobei die Zusammensetzung fähig ist, durch Exposition gegenüber UV-LED-Licht in dem Bereich von 330-700 nm, bevorzugter 350-500 nm, bevorzugter 365-420 nm, bevorzugter 365-405 nm, bevorzugter 365-395 nm und höchst bevorzugt 385-395 nm zu härten.

17. Verfahren zum Kompensieren der Vergilbung einer UVhärtbaren Beschichtungszusammensetzung, die bei Exposition der Zusammensetzung gegenüber härtendem UV-Licht auftritt, umfassend die Schritte:
Bereitstellen einer Zusammensetzung umfassend:
eine oder mehrere alpha-beta-ethylenisch ungesättigte polymerisierbare Doppelbindungen, und
ein Typ-II-Photoinitiatorsystem, das aus einem Thioxanthon und einem Amin besteht, wobei die Thioxanthonkomponente des Typ-II-Photoinitiatorsystems in der Zusammensetzung in einer Menge von 0,1 Gew.-% bis 10 Gew.-% vorhanden ist und die Aminkomponente des Typ-II-Photoinitiatorsystems in der Zusammensetzung in einer Menge von 0,01 Gew.-% bis 15 Gew.-% vorhanden ist;
Härten der Zusammensetzung mit UV-Licht, um eine gehärtete Zusammensetzung bereitzustellen;
Durchführen einer Analyse der b*-Werte der Farbe der gehärteten Zusammensetzung, um das Ausmaß an Vergilbung zu bestimmen;
Auswählen, auf der Grundlage der Analyse, eines Farbmittels, das Vergilbung minimieren wird;
Zugeben des ausgewählten Farbmittels zu der Zusammensetzung, um eine Farbmittel-enthaltende Zusammensetzung bereitzustellen;
Einschließen eines optischen Aufhellers in die Farbmittel-enthaltende Zusammensetzung;
Härten der Farbmittel-enthaltenden Zusammensetzung mit UV-Licht, um eine Farbmittel-enthaltende gehärtete Zusammensetzung bereitzustellen; und
Durchführen einer Analyse der b*-Werte der Farbe der Farbmittel-enthaltenden gehärteten Zusammensetzung, um das Ausmaß an Vergilbung zu bestimmen, wobei eine Farbmittel-enthaltende gehärtete Zusammensetzung bereitgestellt wird, in der Vergilbung kompensiert ist.

18. Bedruckter Gegenstand umfassend:
ein Substrat;
die UV-Licht-härtbare Beschichtungszusammensetzung nach einem der Ansprüche 1-16, die durch Exposition gegenüber UV-Licht gehärtet worden ist; vorzugsweise ferner umfassend eine Tintenschicht.

19. Bedruckter Gegenstand nach Anspruch 18, umfassend:
ein Substrat;
eine Tintenschicht;
einen Überdrucklackschicht, die aus der UV-Lichthärtbaren Beschichtungszusammensetzung nach einem der Ansprüche 1-16 besteht, die durch Exposition gegenüber UV-Licht gehärtet worden ist.

## Revendications

1. Composition de revêtement durcissable par de la lumière UV comprenant :
un composé comprenant une ou plusieurs doubles liaisons polymérisables éthyléniquement alpha bêta-insaturées ;
un système de photoinitiateur de type II composé d'une thioxanthone et d'une amine, le composant thioxanthone du système de photoinitiateur de type II étant présent dans la composition en une quantité de 0,1 % en poids à 10 % en poids, et le composant amine du système de photoinitiateur de type II étant présent dans la composition en une quantité de 0,01 % en poids à 15 % en poids ;
une matière colorante ; et
un azurant optique.

2. Composition de revêtement durcissable par de la lumière UV selon la revendication 1, comprenant en outre un photoinitiateur de type I choisi parmi un oxyde de phosphine, une α-aminoalkylphénone et leurs combinaisons.

3. Composition de revêtement durcissable par de la lumière UV selon l'une quelconque des revendications précédentes, dans laquelle la matière colorante en est une qui décale le jaunissement de la composition ; de préférence, dans laquelle la matière colorante est choisie parmi une matière colorante pourpre, une matière colorante violette, une matière colorante bleue, une matière colorante bleu-violette, des matières colorantes représentant des variations de couleur entre elles, et leurs combinaisons.

4. Composition de revêtement durcissable par de la lumière UV selon l'une quelconque des revendications précédentes, dans laquelle le composé comprenant une ou plusieurs doubles liaisons polymérisables éthyléniquement alpha bêta-insaturées est choisi parmi les acrylates, les méthacrylates, les vinyles, les éthers vinyliques, les acrylamides et leurs combinaisons ; de préférence dans lequel le composé comprenant une ou plusieurs doubles liaisons polymérisables éthyléniquement alpha bêta-insaturées est un composé acrylate, et plus préférablement un acrylate multifonctionnel.

5. Composition de revêtement durcissable par de la lumière UV selon l'une quelconque des revendications précédentes, dans laquelle le composé comprenant une ou plusieurs doubles liaisons polymérisables éthyléniquement alpha bêta-insaturées est choisi parmi l'acrylate de n-octyle, l'acrylate d'isooctyle, l'acrylate de n-décyle, l'acrylate de lauryle, l'acrylate de stéaryle, le diacrylate d'éthylène glycol, le diacrylate de 1,4-butanediol, le diacrylate de 1,6-hexandiol, le diacrylate de dipropylène glycol, le diacrylate de néopentylglycol, les diacrylates de néopentylglycol éthoxylés, les diacrylates de néopentylglycol propoxylés, le diacrylate de tripropylène glycol, le diacrylate de bisphénol A, les diacrylates de bisphénol A éthoxylés, le diacrylate de diglycidyléther de bisphénol A, les diacrylates de bisphénol A éthoxylés, les diacrylates de poly(éthylène)glycol, le triacrylate de triméthylolpropane, les triacrylates de triméthylolpropane éthoxylés, les triacrylates de triméthylolpropane propoxylés, les triacrylates de glycérol propoxylés, le triacrylate de pentaérythritol, les triacrylates de pentaérythritol éthoxylés, les tétraacrylates de pentaérythritol propoxylés, les tétraacrylates de pentaérythritol éthoxylés, le tétraacrylate de ditriméthylolpropane, le pentaacrylate de dipentaérythritol, l'hexaacrylate de dipentaérythritol, l'acrylate oligomère, les acrylates polymères, les acrylates époxy, les acrylates de polyester, les polyuréthanes acrylés, les polyacrylates acrylés, les polyéthers acrylés, les polyamines acrylées, les huiles époxydées acrylées dérivées de l'huile de lin et de l'huile de soja, et leurs combinaisons.

6. Composition de revêtement durcissable par de la lumière UV selon l'une quelconque des revendications précédentes, la thioxanthone étant choisie parmi la 2-isopropylthioxanthone, la 4-isopropylthioxanthone, la 2,4-diméthylthioxanthone, la 2,4-diéthylthioxanthone, la 2,4-diisopropylthioxanthone, la 2-chlorothixanthone, la 2-chloro-4-isopropoxythixanthone, les thioxanthones oligomériques pour des applications à faible migration ayant un poids moléculaire de 500 Daltons ou moins, et leurs combinaisons et/ou dans laquelle l'amine est choisie parmi le benzoate de 2-(diméthylamino)éthyle, le 4-diméthylaminobenzoate d'éthyle, le 4-diméthylaminobenzoate de 2-éthylhexyle, le 4-diméthylaminobenzoate d'isoamyle, le 4-diméthylaminobenzoate de butoxyéthyle, une résine acrylate modifiée par amino ou des aminobenzoates oligomériques, des thioxanthones oligomériques pour applications à faible migration ayant un poids moléculaire de 500 Daltons ou moins, et leurs combinaisons.

7. Composition de revêtement durcissable par de la lumière UV selon l'une quelconque des revendications 2 à 6, dans laquelle l'oxyde de phosphine est choisi parmi l'oxyde de diphényl-(2,4,6-triméthylbenzoyl)-phosphine, le phosphinate (2,4,6--triméthylbenzoyl)-phénylphosphinate d'éthyle, l'oxyde de phényl-bis(2,4,6-triméthylbenzoyl)-phosphine, et leurs combinaisons et/ou dans laquelle la α-aminoalkylphénone est choisie parmi la benzyl-2-diméthylamino-1-(4-morpholinophényl)-butan-1-one, la 2-diméthylamino-2-(4-méthyl-benzyl)-1-(4-morpholin-4-yl-phényl)-butan-1-one, la 2-méthyl-1-[4-(méthoxythio)-phényl]-2-morpholinopropan-2-one, et leurs combinaisons.

8. Composition de revêtement durcissable par de la lumière UV selon l'une quelconque des revendications précédentes, dans laquelle la matière colorante est choisie parmi Pigment Blue 1, Pigment Blue 2, Pigment violet 5, Pigment Blue 9, Pigment Blue 10, Pigment Blue 14, Pigment Blue 15, Pigment Blue 15:1, Pigment Blue 15:2, Pigment Blue 15:3, Pigment Blue 15:4, Pigment Blue 16, Pigment Blue 18, Pigment Blue 19, Pigment Blue 24, Pigment Blue 25, Pigment Blue 56, Pigment Blue 61, Pigment Blue 62, Pigment Blue 64, Pigment Blue 66, Solvent Blue 104, Pigment Violet 1, Pigment Violet 2, Pigment Violet 3, Pigment Violet 5:1, Pigment Violet 13, Pigment Violet 19, Pigment Violet 21, Pigment Violet 23, Pigment Violet 25, Pigment Violet 27, Pigment Violet 29, Pigment Violet 31, Pigment Violet 32, Pigment Violet 37, Pigment Violet 42, Pigment Violet 44, Pigment Violet 50 et leurs combinaisons.

9. Composition de revêtement durcissable par de la lumière UV selon l'une quelconque des revendications 1 à 8, dans laquelle l'azurant optique comprend un groupement choisi parmi stilbène, triazine, thiazole, benzoxazole, coumarine, xanthène, triazole, oxazole, thiophène, pyrazoline et leurs combinaisons, de préférence, l'azurant optique est choisi parmi 2,2'-(thiophénediyl)-bis-(t-butylbenzoxazole), ester phénylique de l'acide 2-(stibyl-4")-(naphto-1',2',4,5)-1,2,3-triazole-2"-sulfonique, 7-(4'-chloro-6"-diéthylamino-1',3',5'-triazine-4'-yl)amino-3-phénylcoumarine, l'acide coumarine 1,4'-diamino-2,2'-stilbènedisulfonique, 2,2'-(2,5-thiophénediyl)bis(5-tert-butylbenzoxazole), 2,2'-(1,2-éthènediyl)bis(4,1-phénylène)-bisbenzoxazole, 4-méthyl-umbelliférone ou peroxyde de carbamide, plus préférablement l'azurant optique est choisi parmi le 2,2'-(1,2-éthènediyl)bis(4,1-phénylène)-bisbenzoxazole ou la coumarine 1.

10. Composition de revêtement durcissable par de la lumière UV selon l'une quelconque des revendications précédentes, dans laquelle le revêtement durci présente une valeur b* de ≤ 5, de préférence ≤ 4, plus préférablement ≤ 3, encore plus préférablement ≤ 2, et encore plus préférablement ≤ 1 et/ou dans laquelle le revêtement durci présente une densité optique, après avoir été traité par une solution aqueuse de permanganate de potassium à 5 % pendant 5 secondes, de ≤ 1, de préférence ≤ 0,6, plus préférablement ≤ 0,5, et encore plus préférablement ≤ 0,4.

11. Composition de revêtement durcissable par de la lumière UV selon l'une quelconque des revendications précédentes, le composé comprenant une ou plusieurs doubles liaisons polymérisables éthyléniquement alpha bêta-insaturées étant présent dans la composition en une quantité de 74 % en poids à 99 % en poids, préférablement de 74 % en poids à 90 % en poids, et plus préférablement de 74 % en poids à 85 % en poids et/ou le composant thioxanthone du système de photoinitiateur de type II étant présent dans la composition en une quantité de 1,0 % en poids à 10 % en poids, et plus préférablement 1,0 % en poids à 5,0 % en poids et/ou le composant amine du système de photoinitiateur de type II est présent dans la composition en une quantité de 1,0 % en poids à 15 % en poids, et plus préférablement 1,0 % en poids à 10 % en poids et/ou la matière colorante étant présente dans la composition en une quantité de 0,001 % en poids à 2,0 % en poids, de préférence 0,01 % en poids à 2,0 % en poids, plus préférablement 0,1 % en poids à 1,0 % en poids, et encore plus préférablement 0,05 % en poids à 0,5 % en poids par rapport au poids par rapport au poids de la composition.

12. Composition de revêtement durcissable par de la lumière UV selon l'une quelconque des revendications précédentes, dans laquelle le composant thioxanthone du système de photoinitiateur de type II est présent dans la composition en une quantité de 0,5 % en poids et supérieure, 1,0 % en poids et supérieure, 1,5 % en poids et supérieure, 2,0 % en poids et supérieure, 2,5 % en poids et supérieure, 3,0 % en poids et plus, 3,5 % en poids et supérieure, 4,0 % en poids et supérieure, 4,5 % en poids et supérieure, 5,0 % en poids et supérieure, 5,5 % en poids et supérieure, 6,0 % en poids et supérieure, 6,5 % en poids et supérieure, 7,0 % en poids et supérieure, 7,5 % en poids et supérieure, 8,0 % en poids et supérieure, 8,5 % en poids et supérieure, 9,0 % en poids et supérieure, 9,5 % en poids et supérieure, jusqu'à 10 % en poids en tant que limite supérieure, et des quantités comprises entre ces valeurs ; préférablement dans laquelle le composant thioxanthone du système de photoinitiateur de type II est présent dans la composition en une quantité supérieure à 1,0 % en poids, 1,5 % en poids et supérieure, 2,5 % en poids et supérieure, 3,0 % en poids et supérieure, 3,5 % en poids et supérieure, 4,0 % en poids et supérieure, 4,5 % en poids et supérieure, 5,0 % en poids et supérieure, 5,5 % en poids et supérieure, 6,0 % en poids et supérieure, 6,5 % en poids et supérieure, 7,0 % en poids et supérieure, 7,5 % en poids et supérieure, 8,0 % en poids et supérieure, 8,5 % en poids et supérieure, 9,0 % en poids et supérieure, 9,5 % en poids et supérieure, jusqu'à 10 % en poids en tant que limite supérieure, et toutes les quantités comprises entre ces valeurs.

13. Composition de revêtement durcissable par de la lumière UV selon l'une quelconque des revendications 2 à 12, le photoinitiateur de type I étant présent dans la composition en une quantité de 0,05 % en poids à 10 % en poids, de préférence de 1,0 % en poids à 10 % en poids, et plus préférablement de 1,5 % en poids à 10 % en poids et/ou dans laquelle l'azurant optique est présent dans la composition en une quantité de 0,001 % en poids à 2,0 % en poids, préférablement de 0,01 % en poids à 2,0 % en poids, plus préférablement encore de 0,05 % en poids à 0,5 % en poids.

14. Composition de revêtement durcissable par de la lumière UV selon l'une quelconque des revendications précédentes, dans laquelle le composé ayant une ou plusieurs doubles liaisons polymérisables éthyléniquement alpha bêta-insaturées comprend, dans la composition, 35 % en poids à 60 % en poids d'un ou plusieurs monomères d'acrylate multifonctionnel, et 20 % en poids à 35 % en poids d'un composant acrylate supplémentaire choisi parmi des acrylates d'époxy, des oligomères d'acrylate de polyester, des oligomères d'acrylate de polyuréthane, et leurs combinaisons et/ou dans laquelle le composé ayant une ou plusieurs doubles liaisons polymérisables éthyléniquement alpha bêta-insaturées comprend, dans la composition, de 5 % en poids à 20 % d'aminoacrylates.

15. Composition de revêtement durcissable par de la lumière UV selon l'une quelconque des revendications précédentes, dans laquelle la composition est durcissable par exposition à une lumière actinique choisie parmi une lumière UV-LED, une lumière UV fournie par une ampoule à mercure basse pression, une lumière UV fournie par une ampoule à arc à mercure moyenne pression, une lumière UV fournie par une ampoule à arc au xénon, une lumière UV fournie par une ampoule aux halogénures métalliques, une lumière UV fournie par une ampoule à excimère, une lumière UV fournie par la lumière du soleil de 250 à 700 nm, et leurs combinaisons ou dans laquelle la composition est capable de durcir par de la lumière UV-LED seule.

16. Composition de revêtement durcissable par de la lumière UV selon l'une quelconque des revendications précédentes, la composition étant capable de durcir par exposition à une lumière UV-LED dans la plage de 330-700 nm, plus préférablement 350-500 nm, plus préférablement 365-420 nm, plus préférablement 365-405 nm, plus préférablement 365-395 nm, et le plus préférablement 385-395 nm.

17. Procédé de décalage du jaunissement d'une composition de revêtement durcissable par des UV qui a lieu dans la composition lors d'une exposition à un durcissement part de la lumière UV, comprenant les étapes de :
fourniture d'une composition comprenant :
une ou plusieurs doubles liaisons polymérisables éthyléniquement alpha bêta-insaturées, et
un système de photoinitiateur de type II composé d'une thioxanthone et d'une amine, le composant thioxanthone du système de photoinitiateur de type II étant présent dans la composition en une quantité de 0,1 % en poids à 10 % en poids, et le composant amine du système de photoinitiateur de type II étant présent dans la composition en une quantité de 0,01 % en poids à 15 % en poids ;
le durcissement de la composition par de la lumière UV pour obtenir une composition durcie ;
la réalisation d'une analyse des valeurs b* de la couleur de la composition durcie pour déterminer le degré de jaunissement ;
la sélection, en fonction de l'analyse, d'une matière colorante qui minimisera le jaunissement ;
l'ajout de la matière colorante sélectionnée à la composition pour fournir une composition incluant une matière colorante ;
comprenant un azurant optique dans la composition contenant une matière colorante ;
le durcissement de la composition comprenant une matière colorante par de la lumière UV pour obtenir une composition durcie comprenant une matière colorante ; et
la réalisation d'une analyse des valeurs b* de la couleur de la composition durcie comprenant une matière colorante pour déterminer le degré de jaunissement, une composition durcie comprenant une matière colorante dans laquelle le jaunissement est décalé étant fournie.

18. Article imprimé comprenant :
un substrat ;
la composition de revêtement durcissable par de la lumière UV selon l'une quelconque des revendications 1 à 16, qui a été durcie par exposition à de la lumière UV ;
comprenant de préférence en outre une couche d'encre.

19. Article imprimé selon la revendication 18 comprenant :
un substrat ;
une couche d'encre ;
une couche de vernis de surimpression composée de la composition de revêtement durcissable par de la lumière UV selon l'une quelconque des revendications 1 à 16, qui a été durcie par exposition à de la lumière UV.
